# FASCICULE DE BREVET EUROPEEN

(11) **EP 1 959 550 B1**
(45) Date de publication et mention de la délivrance du brevet: **14.07.2010**
(21) Numéro de dépôt: 08101425.0
(22) Date de dépôt: 08.02.2008
(51) Int. Cl.: H02M 1/34

(54) **Convertisseur à découpage unipolaire ou bipolaire à trois enroulements magnétiquement couplés**
Wandler mit ein- oder zweipoliger Schaltung mit drei magnetisch gekoppelten Wicklungen
Converter with unipolar or bipolar cutting with three magnetically coupled windings

(30) Priorité: 13.02.2007 FR 0753236
(43) Date de publication de la demande: 20.08.2008
(73) Titulaire: SAGEM Défense Sécurité, 75015 Paris (FR)
(72) Inventeur: Lacombe, Bertrand, 75019 Paris (FR); Salopek, Ivica, 78800 Houilles (FR)
(74) Mandataire: Ilgart, Jean-Christophe

(56) Documents cités:
- EP-A- 0 913 919

## Description

### DOMAINE TECHNIQUE

L'invention se rapporte à un convertisseur à découpage unipolaire ou bipolaire, fonctionnant dans les quadrants (Is>0 ;Vs>0) et (Is<0 ; Vs<0), ainsi qu'à courant ou tension de sortie nuls, possédant des enroulements magnétiquement couplés, pouvant être configuré avec le mode de régulation adapté en source de courant ou source de tension. Elle s'applique à tous les types d'équipement terrestre, naval ou aérien utilisant ce type de convertisseur, notamment les commandes d'actuateur électromécanique des automates de régulation pour turbomoteurs.

### ÉTAT DE LA TECHNIQUE ANTÉRIEURE

La commande d'actionneurs électriques présentant une charge de type RL (résistance et inductance en série) peut être réalisée soit par application d'une tension régulée aux bornes de la bobine de commande de l'actionneur, soit par une source de courant, cette dernière solution étant souvent préférée en environnement sévère car elle permet essentiellement de limiter la puissance utilisée pour commander l'accessoire.

Les sources de courant à découpage peuvent classiquement être regroupées parmi les sources de courant utilisant l'inductance de la charge comme élément de stockage de l'énergie lors de l'opération de découpage, avec pour conséquence l'application aux bornes de la charge, à la fréquence de découpage, d'une tension alternativement positive et négative, les transitions entre ces deux états pouvant dans l'idéal être considérées comme instantanées, et les sources de courant fournissant un courant continu et, par voie de conséquence, une tension continue aux bornes de la charge, dont l'élément de stockage d'énergie pour le découpage est situé sur la carte de commande elle-même.

Les sources de courant à découpage utilisant l'inductance de la charge comme élément de stockage d'énergie ont l'avantage de présenter une commande qui est à première vue simple. Elles comportent peu ou éventuellement pas d'éléments inductifs, ce qui conduit à un gain certain dans les dimensions du circuit. Par contre, elles présentent un certain nombre d'inconvénients. Elles présentent une grande dépendance vis-à-vis de la valeur de l'inductance de la charge : la capacité à contrôler le courant instantané dans les interrupteurs de la source de courant dépend directement de la valeur de l'inductance de charge. La tenue aux courts-circuits entre les bornes de sortie du convertisseur ou entre une quelconque borne de sortie et la masse est très difficile. En effet, en cas de court-circuit de la charge, il n'est pas possible, sauf à ajouter des composants, de limiter le courant instantané. En conséquence, on est contraint en pratique d'ajouter une inductance en sortie de la source de courant afin de limiter le courant de court-circuit, d'ajouter un dispositif de protection et de coupure très rapide pour limiter la valeur maximale du courant de court-circuit, d'ajouter un circuit de démagnétisation de l'inductance de sortie pour gérer la coupure après la détection du court-circuit en sortie, de surdimensionner les interfaces (condensateur de filtrage d'entrée) pour qu'elles puissent supporter le courant de court-circuit. Concernant l'aspect compatibilité électromagnétique (émissions conduites essentiellement), ces sources de courant sont difficiles à rendre compatibles avec les normes d'émission aéronautiques, si on veut une fréquence de découpage élevée, surtout si la charge est commandée au bout de plusieurs mètres de câble. Il en résulte une fréquence de découpage réduite typiquement en dessous de 10 kHz et une obligation de dimensionner un filtre de sortie (mode commun et mode différentiel) qui jouera un rôle de premier plan sur la stabilité de l'ensemble. Ce type de source de courant à découpage est restreint à des applications de forte puissance, pour lesquelles une fréquence de découpage faible n'est pas forcément un handicap.

Pour les sources de courant fournissant une tension continue aux bornes de la charge, le découpage ne s'effectue plus dans la charge mais le courant (ou la tension) est régulé en sortie d'un convertisseur à découpage comprenant une inductance stockant au minimum toute l'énergie transférée à la charge et un condensateur est ajouté pour lisser la tension de sortie. En conséquence, la tension de sortie est quasiment continue aux bornes de la charge. Il y a donc moins de difficultés pour tenir les normes aéronautiques de bruit émis en conduction. En cas de court-circuit de la charge, le courant dans le convertisseur reste naturellement limité. On peut envisager des fréquences de découpage dépassant les 100 kHz, limitées en fait par le rendement du convertisseur et la performance des circuits de commande de grille des éléments interrupteurs.

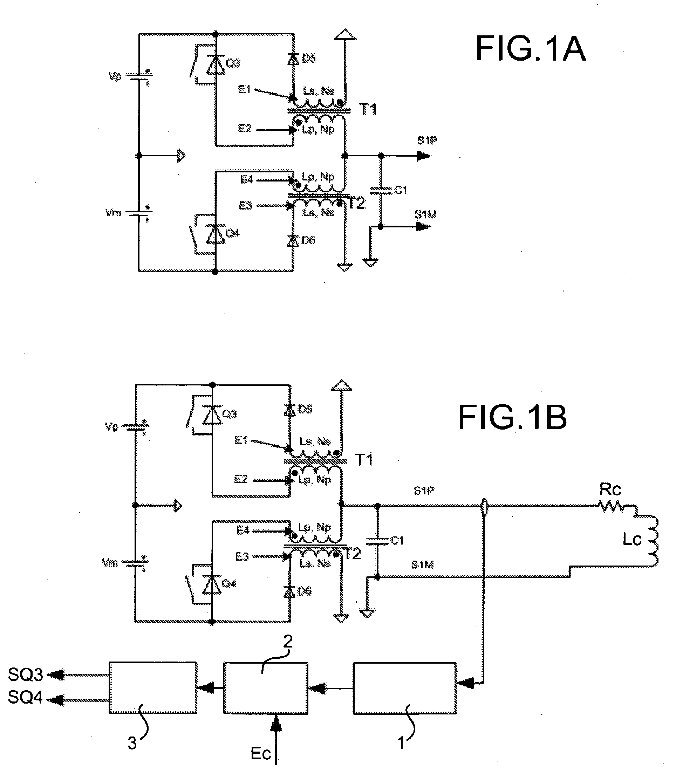

La figure 1a est un schéma électrique d'un convertisseur de l'art antérieur fournissant une tension continue aux bornes d'une charge. Le circuit est alimenté par une tension positive Vp (par exemple +25V) et une tension négative Vm (par exemple -25V) par rapport à la masse. Il comprend deux éléments T1 et T2 comprenant chacun deux enroulements magnétiquement couplés autour d'un noyau magnétique. Les enroulements d'un même élément T1 ou T2 sont bobinés en opposition comme indiqué par un point sur la figure 1. L'enroulement E1 de l'élément T1 possède une première extrémité reliée à la tension Vp par l'intermédiaire d'une diode D5 montée en inverse par rapport à la tension Vp, sa deuxième extrémité étant à la masse. L'enroulement E2 de l'élément T1 possède une première extrémité reliée à une première borne d'un interrupteur Q3 dont la deuxième borne est reliée à la tension Vp. La deuxième extrémité de l'enroulement E2 est reliée à la borne de sortie S1P du circuit. L'enroulement E3 de l'élément T2 possède une première extrémité reliée à la tension Vm par l'intermédiaire d'une diode D6 montée en inverse par rapport à la tension Vm, sa deuxième extrémité étant à la masse. L'enroulement E4 de l'élément T2 possède une première extrémité reliée à une première borne d'un interrupteur Q4 dont la deuxième borne est reliée à la tension Vm. La deuxième extrémité de l'enroulement E4 est reliée à la borne de sortie S1P du circuit. Un condensateur de lissage C1 est branché entre la sortie S1P et la masse.

Le convertisseur est transformé en source de courant par l'ajout d'un moyen de mesure du courant de sortie, d'une régulation et d'un modulateur adaptés. C'est ce que montre la figure 1b où la charge branchée en sortie du convertisseur est représentée sous la forme d'une résistance Rc et d'une inductance Lc branchées en série. Le courant de sortie est mesuré par un moyen de mesure 1 qui délivre un signal représentatif à une première entrée d'un moyen de régulation (ou correcteur) 2. Une deuxième entrée Ec du moyen de régulation 2 reçoit un signal de consigne. Le signal de sortie du moyen de régulation 2 est adressé à l'entrée d'un modulateur 3 qui délivre un signal de commande SQ3 à l'interrupteur Q3 et un signal de commande SQ4 à l'interrupteur Q4.

Le convertisseur illustré par la figure 1a comprend donc quatre enroulements et deux noyaux magnétiques, ce qui conduit à un coût relativement élevé et un encombrement du circuit relativement grand.

EP-A-0 913 919 décrit un convertisseur à découpage alimenté par une tension positive et une tension négative par rapport à la masse, avec deux interrupteurs en série délivrant une tension de sortie à un point commun, et avec deux diodes montées en parallèle avec les deux interrupteurs, avec des enroulements primaires dans le circuit de sortie sur une charge et avec un enroulement secondaire en série avec une bobine pour évacuer l'énergie dans la source de tension quand les interrupteurs sont ouverts.

### EXPOSÉ DE L'INVENTION

Afin de diminuer le coût et l'encombrement d'un convertisseur à découpage fournissant une tension continue positive, négative ou nulle aux bornes d'une charge, il est proposé, selon la présente invention, un circuit à trois enroulements couplés sur un seul noyau magnétique. Il est alors nécessaire d'ajouter deux diodes au circuit, mais ces éléments sont de faible coût et de faible encombrement.

Un premier objet de l'invention consiste en un convertisseur à découpage alimenté par une tension positive et une tension négative par rapport à la masse, et délivrant une tension de sortie entre une première borne de sortie et une deuxième borne de sortie, comprenant trois enroulements bobinés autour d'un noyau magnétique, un premier et un deuxième desdits enroulements étant montés en série et bobinés en opposition, leurs extrémités communes, ou premières extrémités, étant reliées à la masse, la deuxième extrémité du premier enroulement étant reliée à la tension positive par l'intermédiaire d'une première diode montée en inverse par rapport à la tension positive, la deuxième extrémité du deuxième enroulement étant reliée à la tension négative par l'intermédiaire d'une deuxième diode montée en inverse par rapport à la tension négative, le troisième enroulement possédant une première extrémité reliée à un point milieu d'une branche reliant la tension positive à la tension négative, la partie de branche reliant le point milieu à la tension positive comprenant, disposés en série, un premier moyen formant interrupteur et une troisième diode montée en direct par rapport à la tension positive et formant ensemble un interrupteur unidirectionnel à pouvoir de blocage direct et inverse, la partie de branche reliant le point milieu à la tension négative comprenant, disposés en série, un deuxième moyen formant interrupteur et une quatrième diode montée en direct par rapport à la tension négative et formant ensemble un interrupteur unidirectionnel à pouvoir de blocage direct et inverse, la deuxième extrémité du troisième enroulement étant reliée à la borne de sortie, le troisième enroulement possédant un nombre de spires supérieur au nombre de spires du premier enroulement et supérieur au nombre de spires du deuxième enroulement.

Avantageusement, un condensateur de lissage est branché entre la première borne de sortie et la masse.

Avantageusement aussi, dans la branche reliant la tension positive à la tension négative, ladite disposition en série consiste à disposer les premier et deuxième moyens formant interrupteur du côté des tensions positive ou négative respectives et à disposer les diodes du côté du point milieu.

Les moyens formant interrupteur peuvent être choisis parmi les transistors MOS, les transistors bipolaires, les transistors IGBT ou tout autre interrupteur ayant un pouvoir de conduction bidirectionnel et un pouvoir de blocage direct.

Pour une première application, le convertisseur peut comprendre en outre un moyen de mesure de la tension de sortie du convertisseur, ce moyen de mesure délivrant un signal de sortie représentatif de la tension de sortie à une première entrée d'un moyen de régulation dont une deuxième entrée reçoit un signal de consigne, le moyen de régulation délivrant un signal fourni à l'entrée d'un modulateur dont une première sortie envoie un signal de commande au premier moyen formant interrupteur et dont une deuxième sortie envoie un signal de commande au deuxième moyen formant interrupteur, le convertisseur étant ainsi configuré en source de tension.

Pour une deuxième application, le convertisseur peut comprendre en outre un moyen de mesure du courant de sortie du convertisseur, ce moyen de mesure délivrant un signal de sortie représentatif du courant de sortie du convertisseur à une première entrée d'un moyen de régulation dont une deuxième entrée reçoit un signal de consigne, le moyen de régulation délivrant un signal fourni à l'entrée d'un modulateur dont une première sortie envoie un signal de commande au premier moyen formant interrupteur et dont une deuxième sortie envoie un signal de commande au deuxième moyen formant interrupteur, le convertisseur étant ainsi configuré en source de courant.

Le convertisseur à découpage selon l'invention peut équiper une commande d'actuateur électromécanique, un automate de régulation, un turbomoteur ou un équipement terrestre, naval ou aéronautique.

Le convertisseur à découpage selon la présente invention peut fonctionner selon les procédés suivants.

Un premier procédé comprend les étapes suivantes, pour un cycle de fonctionnement et pour faire passer un courant négatif dans la charge :
- une première étape au cours de laquelle le premier moyen formant interrupteur est ouvert, la quatrième diode est passante, le deuxième moyen formant interrupteur est fermé et les première, deuxième et troisième diodes sont bloquées pendant une première partie de cycle, le convertisseur fonctionnant en mode continu ou en mode discontinu,
- une deuxième étape, succédant à la première étape, au cours de laquelle, les premier et deuxième moyens formant interrupteur sont ouverts, la deuxième diode est passante et les première, troisième et quatrième diodes sont bloquées pendant une deuxième partie de cycle, cette deuxième partie de cycle n'achevant pas le cycle si le convertisseur fonctionne en mode discontinu et achevant le cycle si le convertisseur fonctionne en mode continu,
- une troisième étape, succédant à la deuxième étape si le convertisseur fonctionne en mode discontinu, au cours de laquelle les premier et deuxième moyens formant interrupteur sont ouverts et les première, deuxième, troisième et quatrième diodes sont bloquées pendant une troisième partie de cycle s'achevant à la fin du cycle.

Un deuxième procédé comprend les étapes suivantes, pour un cycle de fonctionnement et pour faire passer un courant positif dans la charge :
- une première étape au cours de laquelle le premier moyen formant interrupteur est fermé, la troisième diode est passante, le deuxième moyen formant interrupteur est ouvert et les première, deuxième et quatrième diodes sont bloquées pendant une première partie du cycle, le convertisseur fonctionnant en mode continu ou en mode discontinu,
- une deuxième étape, succédant à la première étape, au cours de laquelle la première diode est passante, les premier et deuxième moyens formant interrupteur sont ouverts et les deuxième, troisième et quatrième diodes sont bloquées pendant une deuxième partie du cycle, cette deuxième partie de cycle n'achevant pas le cycle si le convertisseur fonctionne en mode discontinu et achevant le cycle si le convertisseur fonctionne en mode continu,
- une troisième étape, succédant à la deuxième étape si le convertisseur fonctionne en mode discontinu, au cours de laquelle les premier et deuxième moyens formant interrupteur sont ouverts, les premier, deuxième, troisième et quatrième diodes sont bloquées, pendant une troisième partie du cycle s'achevant à la fin du cycle.

Un troisième procédé comprend les étapes suivantes, pour un cycle de fonctionnement et pour faire passer un courant négatif dans la charge, le convertisseur fonctionnant en mode continu :
- une première étape au cours de laquelle le premier moyen formant interrupteur est fermé, la troisième diode est passante, le deuxième moyen formant interrupteur est ouvert et les première et quatrième diodes sont bloquées pendant une première partie du cycle, la deuxième diode étant bloquée si la tension de sortie du convertisseur est, en valeur absolue, suffisamment faible,
- une deuxième étape, succédant à la première étape, au cours de laquelle la première diode est passante, les premier et deuxième moyens formant interrupteur sont ouverts et les deuxième, troisième et quatrième diodes sont bloquées pendant une deuxième partie du cycle,
- une troisième étape, succédant à la deuxième étape, au cours de laquelle le deuxième moyen formant interrupteur est fermé, la quatrième diode est passante, le premier moyen formant interrupteur est ouvert et les première, deuxième et troisième diodes sont bloquées, pendant une troisième partie du cycle,
- une quatrième étape, succédant à la troisième étape, au cours de laquelle la deuxième diode est passante, les premier et deuxième moyens formant interrupteur sont ouverts et la première, troisième et quatrième diodes sont bloquées, pendant une quatrième partie du cycle s'achevant à la fin du cycle.

Un quatrième procédé comprend les étapes suivantes, pour un cycle de fonctionnement et pour faire passer un courant positif dans la charge, le convertisseur fonctionnant en mode continu :
- une première étape au cours de laquelle le premier moyen formant interrupteur est fermé, la troisième diode est passante, le deuxième moyen formant interrupteur est ouvert et les première, deuxième et quatrième diodes sont bloquées pendant une première partie du cycle,
- une deuxième étape, succédant à la première étape, au cours de laquelle la première diode est passante, les premier et deuxième moyens formant interrupteur sont ouverts et les deuxième, troisième et quatrième diodes sont bloquées pendant une deuxième partie du cycle,
- une troisième étape, succédant à la deuxième étape, au cours de laquelle le deuxième moyen formant interrupteur est fermé, la quatrième diode est passante, le premier moyen formant interrupteur est ouvert et les deuxième et troisième diodes sont bloquées, pendant une troisième partie du cycle, la première diode est bloquée si la tension de sortie est, en valeur absolue, suffisamment faible,
- une quatrième étape, succédant à la troisième étape, au cours de laquelle la deuxième diode est passante, les premier et deuxième moyens formant interrupteur sont ouverts et la première, troisième et quatrième diodes sont bloquées, pendant une quatrième partie du cycle s'achevant à la fin du cycle.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1a est un schéma électrique d'un convertisseur à découpage de l'art antérieur fournissant une tension continue aux bornes d'une charge,
- la figure 1b est un schéma électrique du convertisseur de la figure 1a utilisé en tant que source de courant à découpage par ajout d'un moyen de mesure du courant de sortie, ainsi que des correcteur et modulateur adéquats,
- la figure 2 est un schéma électrique d'un convertisseur à découpage fournissant une tension continue aux bornes d'une charge, selon l'invention,
- les figures 3A à 3N illustrent le mode de fonctionnement de la présente invention,
- les figures 4A à 4F sont des chronogrammes correspondant à différents modes de fonctionnement illustrés par les figures 3A à 3N,
- la figure 5a montre le principe d'utilisation du convertisseur selon l'invention en tant que source de tension,
- la figure 5b montre le principe d'utilisation du convertisseur selon l'invention en tant que source de courant.

### EXPOSÉ DÉTAILLÉ D'UN MODE DE RÉALISATION DE L'INVENTION

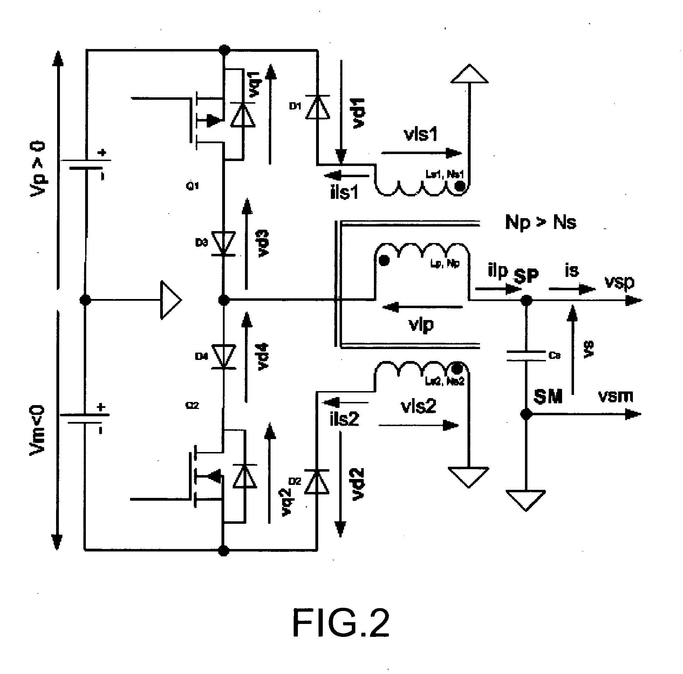

La figure 2 est un schéma électrique d'un convertisseur à découpage fournissant une tension continue aux bornes d'une charge, selon l'invention. Ce convertisseur peut être de la même manière que pour le convertisseur décrit sur les figures 1a et 1b converti en source de courant à découpage par l'ajout d'un moyen (direct ou indirect) de mesure du courant de la charge et des correcteur et modulateur adéquats. Comme pour la figure 1a, le circuit est alimenté par une tension positive Vp (par exemple +25V) et une tension négative Vm (par exemple -25V) par rapport à la masse. Il comprend un élément formant transformateur et comprenant trois enroulements Lp, Ls1 et Ls2 bobinés autour d'un unique noyau magnétique. Le sens de bobinage est indiqué par un point sur la figure 2. Les enroulements Ls1 et Ls2 sont montés en série pour constituer le secondaire de l'élément formant transformateur, leur point commun (leurs premières extrémités) étant à la masse. L'enroulement Lp constitue le primaire de l'élément formant transformateur. La deuxième extrémité de l'enroulement Ls1 est reliée à la tension Vp par l'intermédiaire d'une diode D1 montée en inverse par rapport à la tension Vp. La deuxième extrémité de l'enroulement Ls2 est reliée à la tension Vm par l'intermédiaire d'une diode D2 montée en inverse par rapport à la tension Vm. L'enroulement Lp a une première extrémité reliée à la cathode d'une diode D3 et à l'anode d'une diode D4. La deuxième extrémité de l'enroulement Lp est reliée à la borne de sortie SP du circuit. Une première borne d'un interrupteur Q1 est reliée à l'anode de la diode D3 et sa deuxième borne est reliée à la tension Vp. Une première borne d'un interrupteur Q2 est reliée à la cathode de la diode D4 et sa deuxième borne est reliée à la tension Vm. Un condensateur de lissage Cs est branché entre la sortie SP et la masse. La sortie SM peut être reliée à la masse mécanique directement, ou via une résistance, suivant le besoin de l'utilisateur.

Les interrupteurs Q1 et Q2 sont avantageusement des éléments à transistors MOSFET à canal N ou à canal P, suivant les besoins de l'utilisateur. Ils peuvent être remplacés par tout autre interrupteur ayant une capacité de conduction bi-directionnelle et une capacité de blocage direct.

Np étant le nombre de spires de l'enroulement Lp, Ns1 étant le nombre de spires de l'enroulement Ls1 et Ns2 étant le nombre de spires de l'enroulement Ls2, Np est supérieur à Ns1 et à Ns2, par exemple Ns1 = Ns2 = 0,75 Np.

La figure 2 mentionne les tensions suivantes :
- vq1 aux bornes de Q1,
- vq2 aux bornes de Q2,
- vd1 aux bornes de D1,
- vd2 aux borne de D2,
- vd3 aux bornes de D3,
- vd4 aux bornes de D4,
- vls1 aux bornes de Ls1,
- vls2 aux bornes de Ls2,
- vlp aux bornes de Lp, et
- vs aux bornes de Cs, soit la tension de sortie du convertisseur.

La figure 2 mentionne également les courants suivants :
- ils1 traversant l'enroulement Ls1,
- ils2 traversant l'enroulement Ls2,
- ilp traversant l'enroulement Lp, et
- is traversant la charge Z du convertisseur, soit le courant de sortie.

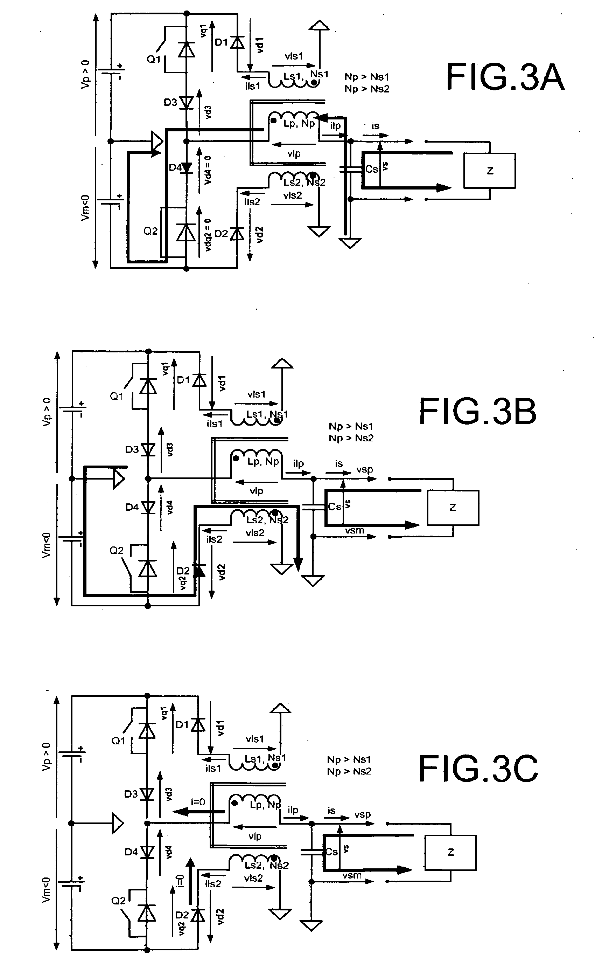

Le fonctionnement du convertisseur à découpage va maintenant être expliqué à l'aide des figures 3A à 3N en fonction des commandes (fermeture, ouverture) envoyées aux interrupteurs Q1 et Q2. Sur ces figures, les courants qui circulent dans le circuit sont indiqués par des traits gras. Comme on le verra, le convertisseur selon l'invention est un convertisseur deux quadrants :
vs>0, is>0 et vs<0, is<0.

Les figures 3A à 3F concernent un mode de fonctionnement où un seul transistor Q1 ou Q2 (formant interrupteur) conduit lorsque le courant de sortie est négatif (is<0) ou lorsque le courant de sortie est positif (is>0).

Les figures 3A à 3C concernent un mode de fonctionnement où le courant de sortie is est négatif, pour un cycle de fonctionnement (de t=0 à t=T).

La figure 3A illustre une première étape du cycle de fonctionnement entre les instants t=0 et t=t₁ (avec t₁<T). Le circuit peut fonctionner en mode continu et en mode discontinu. Au cours de cette étape, la commande du circuit est telle que :
- Q2 et D4 conduisent,
- Q1, D1, D2 et D3 sont bloqués.

La figure 3B illustre une deuxième étape du cycle de fonctionnement, entre les instants t=t₁ et t=t₂. Le circuit peut fonctionner en mode continu (dans ce cas t₂=T) ou en mode discontinu. Au cours de cette étape, la commande du circuit est telle que :
- D2 conduit,
- Q1, Q2, D1, D3 et D4 sont bloqués.

La figure 3C illustre une troisième étape du cycle de fonctionnement, uniquement pour le mode discontinu, entre t=t₂ et t=T. Au cours de cette étape, la commande du circuit est telle que :
- Q1, Q2, D1, D2, D3 et D4 sont bloqués,
- le courant is circulant dans la charge est fourni par l'énergie accumulée dans le condensateur Cs.

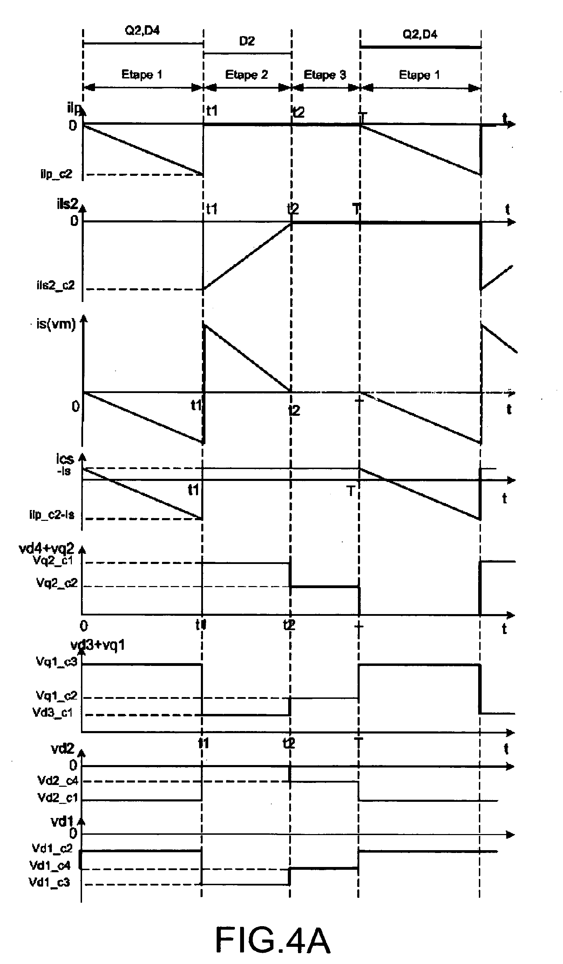

La figure 4A montre les chronogrammes correspondant au mode de fonctionnement illustré par les figures 3A à 3C pour un mode discontinu, donc pour un cycle de fonctionnement comportant trois étapes.

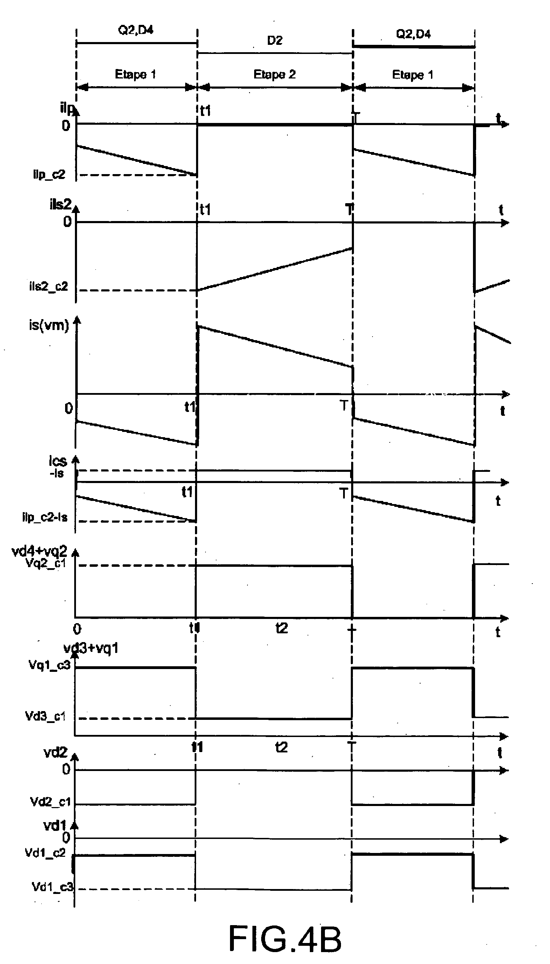

La figure 4B montre les chronogrammes correspondant au mode de fonctionnement illustré par les figures 3A à 3C pour un mode continu, donc un cycle de fonctionnement comportant deux étapes.

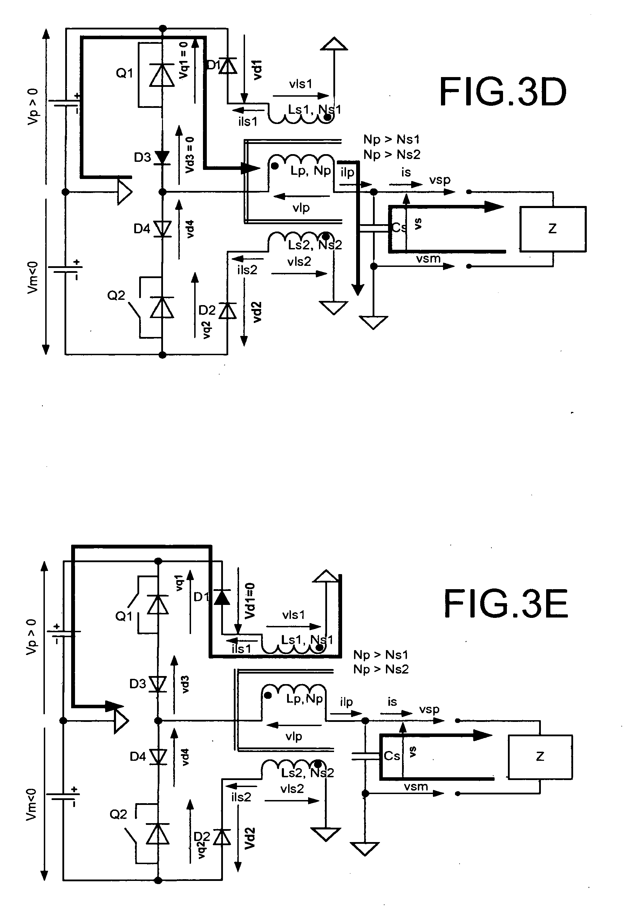

Les figures 3D à 3F concernent un mode de fonctionnement où le courant de sortie is est positif, pour un cycle de fonctionnement (de t=0 à t=T).

La figure 3D illustre une première étape du cycle de fonctionnement entre les instants t=0 et t=t₁ (avec t₁<T). Le circuit peut fonctionner en mode continu et en mode discontinu. Au cours de cette étape, la commande du circuit est telle que :
- Q1 et D3 conduisent,
- Q2, D1, D2 et D4 sont bloqués.

La figure 3E illustre une deuxième étape du cycle de fonctionnement, entre les instants t=t₁ et t=t₂. Le circuit peut fonctionner en mode continu (dans ce cas t₂=T) ou en mode discontinu. Au cours de cette étape, la commande du circuit est telle que :
- D1 conduit,
- Q1, Q2, D2, D3 et D4 sont bloqués.

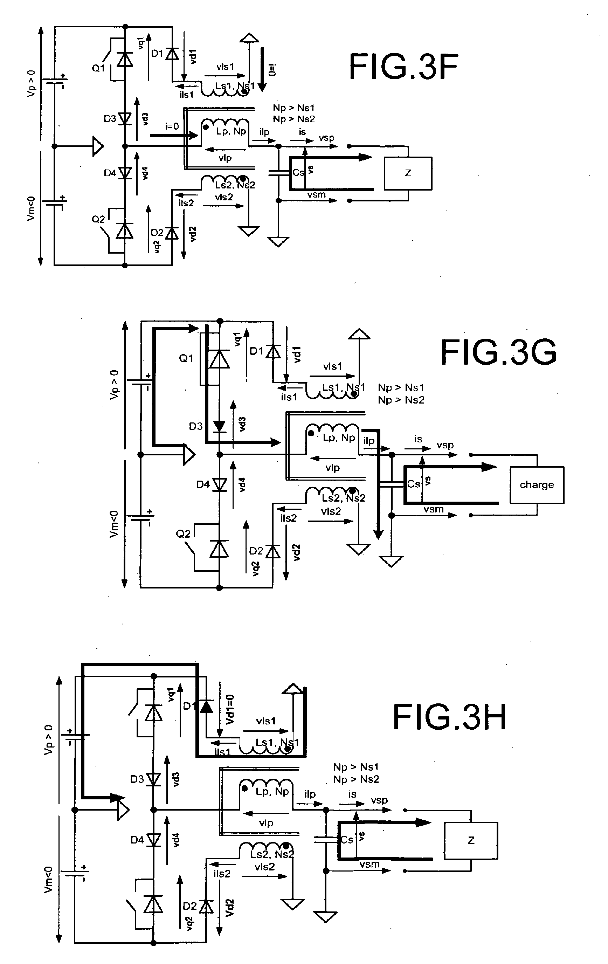

La figure 3F illustre une troisième étape du cycle de fonctionnement, uniquement pour le mode discontinu, entre t=t₂ et t=T. Au cours de cette étape, la commande du circuit est telle que :
- Q1, Q2, D1, D2, D3 et D4 sont bloqués,
- le courant is circulant dans la charge est fourni par l'énergie accumulée dans le condensateur Cs.

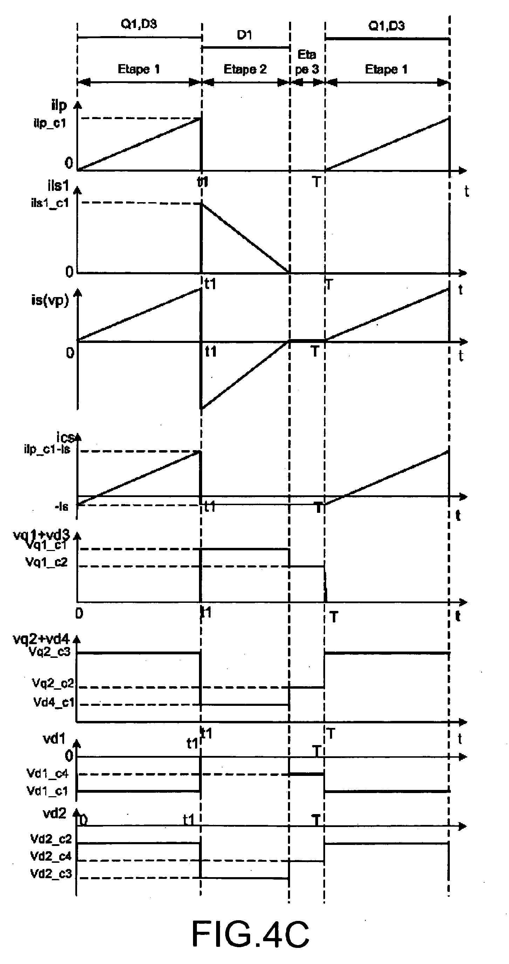

La figure 4C montre les chronogrammes correspondant au mode de fonctionnement illustré par les figures 3D à 3F pour un mode discontinu, donc pour un cycle de fonctionnement comportant trois étapes.

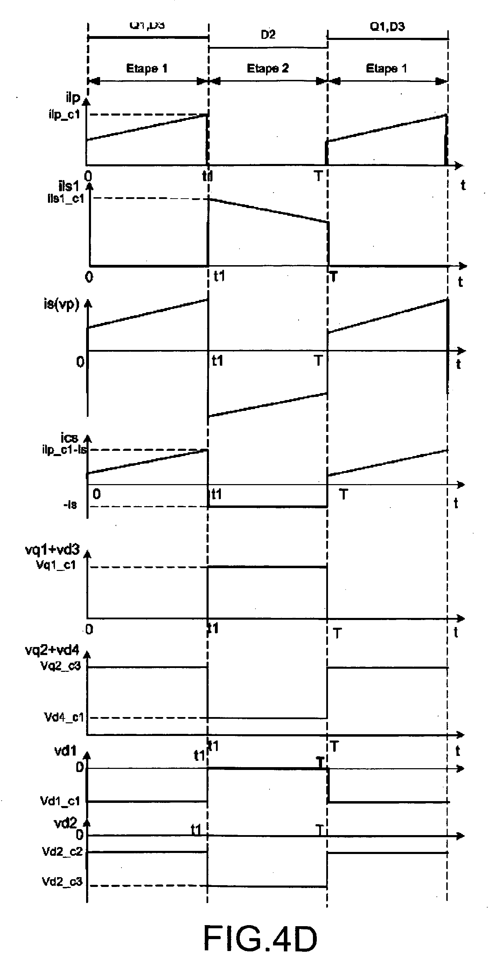

La figure 4D montre les chronogrammes correspondant au mode de fonctionnement illustré par les figures 3D à 3F pour un mode continu, donc pour un cycle de fonctionnement comportant deux étapes.

Les figures 3G à 3N concernent un mode de fonctionnement où les deux transistors Q1 et Q2 (formant interrupteur) conduisent lorsque le courant de sortie est négatif (is<0) et lorsque le courant de sortie est positif (is>0). Le fonctionnement décrit est en mode continu.

Les figures 3G à 3J concernent un mode de fonctionnement où le courant de sortie is est négatif, pour un cycle de fonctionnement (de t=0 à t=T).

La figure 3G illustre une première étape du cycle de fonctionnement, entre les instants t=0 et t=t₁. Au cours de cette étape, la commande du circuit est telle que :
- Q1 et D3 conduisent,
- Q2, D1 et D4 sont bloqués,
- D2 est bloquée si la tension de sortie en continu est, en valeur absolue, suffisamment faible.

La figure 3H illustre une deuxième étape du cycle de fonctionnement, entre les instants t=t₁ et t=t₂. Au cours de cette étape, la commande du circuit est telle que :
- D1 conduit,
- Q1, Q2, D2, D3 et D4 sont bloqués.

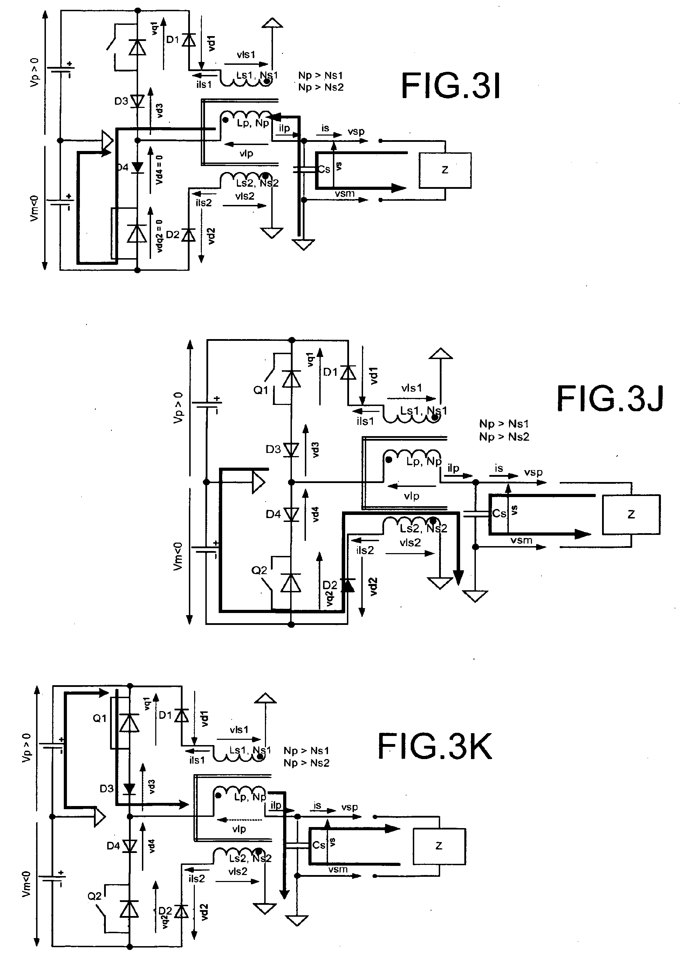

La figure 3I illustre une troisième étape du cycle de fonctionnement, entre les instants t=t₂ et t=t₃. Au cours de cette étape, la commande du circuit est telle que :
- Q2 et D4 conduisent,
- Q1, D1, D2 et D3 sont bloqués

La figure 3J illustre une quatrième étape du cycle de fonctionnement, entre les instants t=t₃ et t=T. Au cours de cette étape, la commande du circuit est telle que :
- D2 conduit,
- Q1, Q2, D1, D3 et D4 sont bloqués.

Les figures 3K à 3N concernent un mode de fonctionnement où le courant de sortie is est positif, pour un cycle de fonctionnement (de t=0 à t=T).

La figure 3K illustre une première étape du cycle de fonctionnement, entre les instants t=0 et t=t₁. Au cours de cette étape, la commande du circuit est telle que :
- Q1 et D3 conduisent,
- Q2, D1, D2 et D4 sont bloqués.

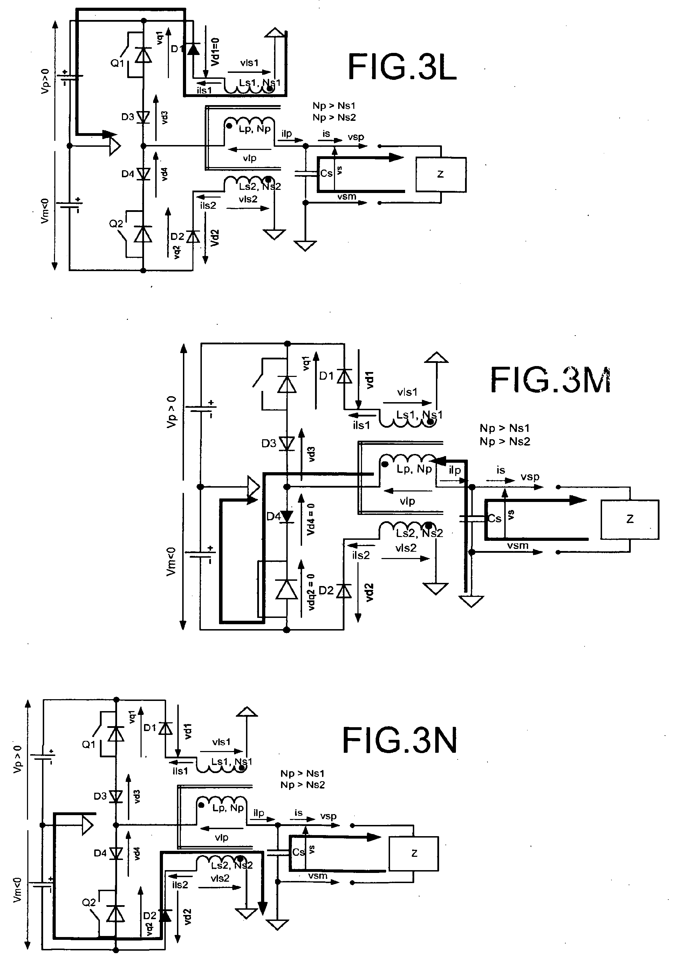

La figure 3L illustre une deuxième étape du cycle de fonctionnement, entre les instants t=t₁ et t=t₂. Au cours de cette étape, la commande du circuit est telle que :
- D1 conduit,
- Q1, Q2, D2, D3 et D4 sont bloqués.

La figure 3M illustre une troisième étape du cycle de fonctionnement, entre les instants t=t₂ et t=t₃. Au cours de cette étape, la commande du circuit est telle que :
- Q2 et D4 conduisent
- Q1, D2 et D3 sont bloqués,
- D1 est bloquée si la tension de sortie en continu est, en valeur absolue, suffisamment faible.
   La figure 3N illustre une quatrième étape du cycle de fonctionnement, entre les instants t=t₃ et t=T. Au cours de cette étape, la commande du circuit est telle que
- D2 conduit,
- Q1, Q2, D1, D3 et D4 sont bloqués.

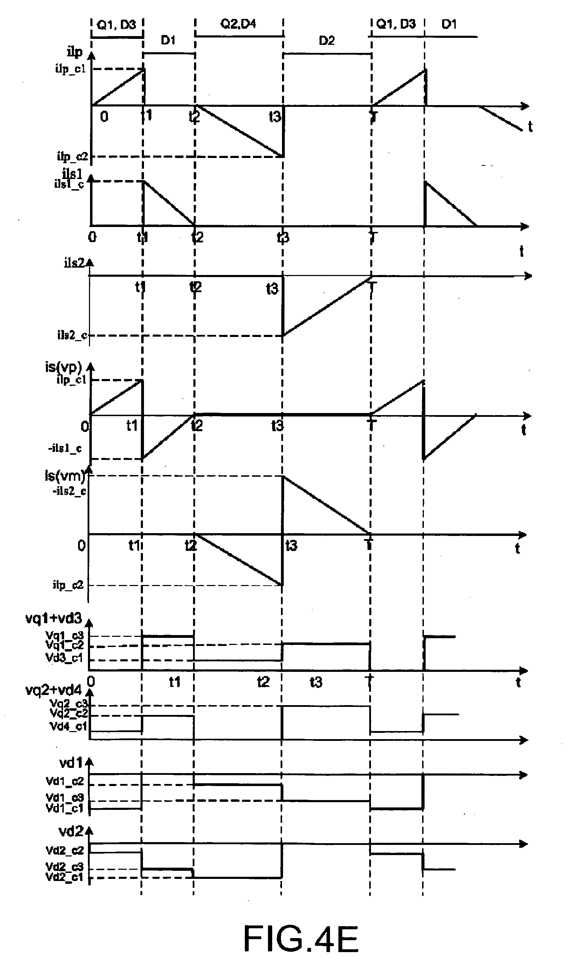

La figure 4E montre les chronogrammes correspondant au mode de fonctionnement illustré par les figures 3G à 3J, donc pour un cycle de fonctionnement comportant quatre étapes.

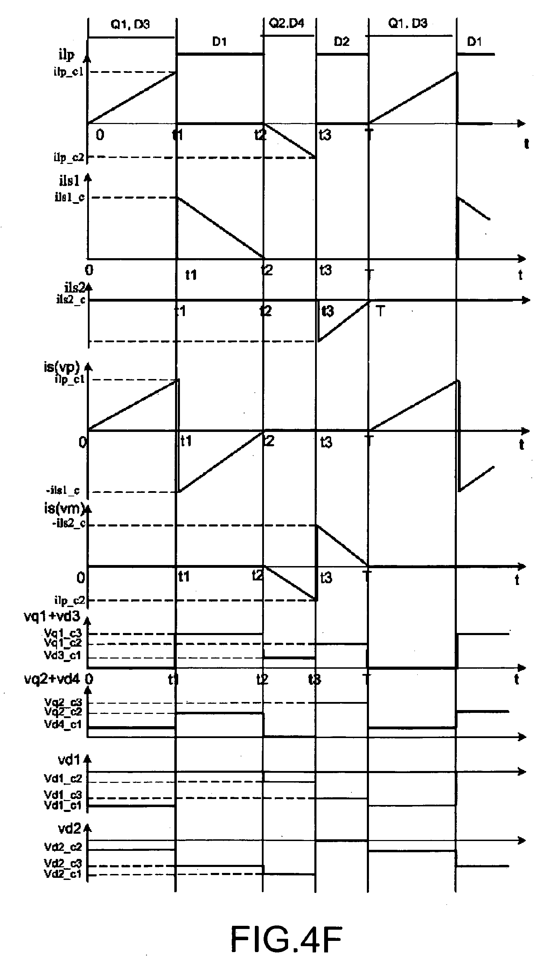

La figure 4F montre les chronogrammes correspondant au mode de fonctionnement illustré par les figures 3K à 3N, donc pour un cycle de fonctionnement comportant également quatre étapes.

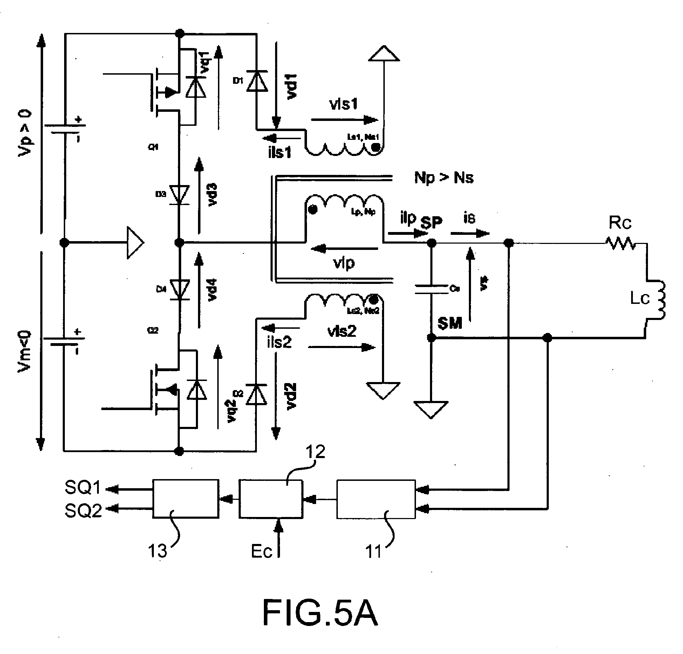

La figure 5a montre le principe d'utilisation du convertisseur selon l'invention en tant que source de tension par l'ajout d'un moyen de mesure 11 de la tension différentielle entre les sorties SP et SM, d'un correcteur adéquat 12 recevant une consigne Ec et d'un modulateur 13 adéquat. Les sorties du modulateur 13 fournissent les tensions de commande SQ1 et SQ2 des transistors Q1 et Q2.

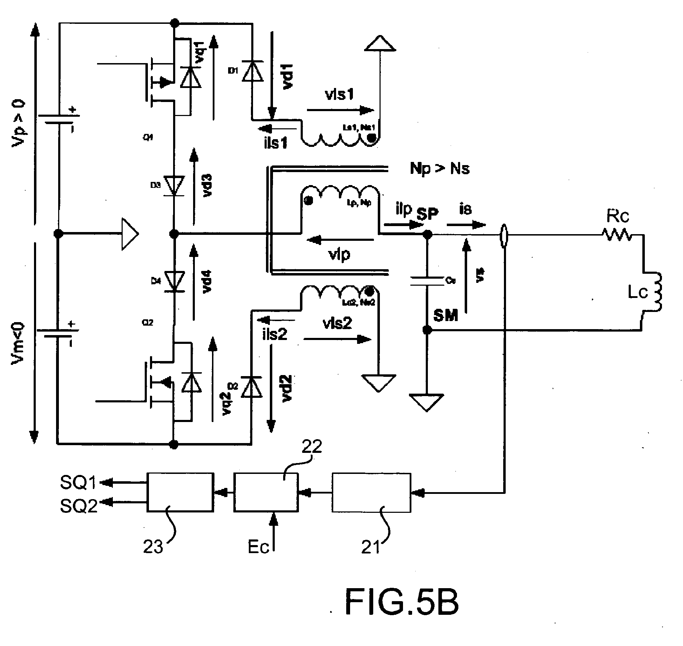

La figure 5b montre le principe d'utilisation du convertisseur selon l'invention en tant que source de courant par l'ajout d'un moyen de mesure 21 de courant de sorties is du convertisseur, d'un correcteur adéquat 22 recevant une consigne Ec et d'un modulateur adéquat 23. Les sorties du modulateur 23 fournissent les tensions de commande SQ1 et SQ2 des transistors Q1 et Q2.

## Revendications

1. Convertisseur à découpage alimenté par une tension positive (Vp) et une tension négative (Vm) par rapport à la masse, et délivrant une tension de sortie entre une première borne de sortie (SP) et une deuxième borne de sortie (SM), cette dernière étant reliée directement à la masse ou à travers une résistance, comprenant trois enroulements (Ls1, Ls2, Lp) bobinés autour d'un noyau magnétique, un premier (Ls1) et un deuxième (Ls2) desdits enroulements étant montés en série et bobinés en opposition, leurs extrémités communes, ou premières extrémités, étant reliées à la masse, la deuxième extrémité du premier enroulement (Ls1) étant reliée à la tension positive (Vp) par l'intermédiaire d'une première diode (D1) montée en inverse par rapport à la tension positive (Vp), la deuxième extrémité du deuxième enroulement (Ls2) étant reliée à la tension négative (Vm) par l'intermédiaire d'une deuxième diode (D2) montée en inverse par rapport à la tension négative (Vm), le troisième enroulement (Lp) possédant une première extrémité reliée à un point milieu d'une branche reliant la tension positive (Vp) à la tension négative (Vm), la partie de branche reliant le point milieu à la tension positive (Vp) comprenant, disposés en série, un premier moyen formant interrupteur (Q1) et une troisième diode (D3) montée en direct par rapport à la tension positive (Vp), et formant ensemble un interrupteur unidirectionnel à pouvoir de blocage direct et inverse, la partie de branche reliant le point milieu à la tension négative (Vm) comprenant, disposés en série, un deuxième moyen formant interrupteur (Q2) et une quatrième diode (D4) montée en direct par rapport à la tension négative (Vm), et formant ensemble un interrupteur unidirectionnel à pouvoir de blocage direct et inverse, la deuxième extrémité du troisième enroulement (Lp) étant reliée à la première borne de sortie (SP), le troisième enroulement (Lp) possédant un nombre de spires supérieur au nombre de spires du premier enroulement (Ls1) et supérieur au nombre de spires du deuxième enroulement (Ls2).

2. Convertisseur a découpage selon la revendication 1, dans lequel un condensateur de lissage (Cs) est branché entre la première borne de sortie (SP) et la masse.

3. Convertisseur à découpage selon l'une des revendications 1 ou 2, dans lequel, dans la branche reliant la tension positive (Vp) à la tension négative (Vm), ladite disposition en série consiste à disposer les premier (Q1) et deuxième (Q2) moyens formant interrupteur du côté des tensions positive ou négative respectives et à disposer les diodes (D3, D4) du côté du point milieu.

4. Convertisseur à découpage selon l'une quelconque des revendications 1 à 3, dans lequel les premier (Q1) et deuxième (Q2) moyens formant interrupteur sont choisis parmi les transistors MOS, les transistors bipolaires, les transistors IGBT ou tout autre interrupteur ayant une capacité de conduction bi-directionnelle et une capacité de blocage direct.

5. Convertisseur à découpage selon l'une quelconque des revendications 1 à 4, comprenant en outre un moyen de mesure (11) de la tension de sortie du convertisseur, ce moyen de mesure délivrant un signal de sortie représentatif de la tension de sortie à une première entrée d'un moyen de régulation (12) dont une deuxième entrée reçoit un signal de consigne, le moyen de régulation (12) délivrant un signal fourni à l'entrée d'un modulateur (13) dont une première sortie envoie un signal de commande (SQ1) au premier moyen formant interrupteur (Q1) et dont une deuxième sortie envoie un signal de commande (SQ2) au deuxième moyen formant interrupteur (Q2), le convertisseur étant ainsi configuré en source de tension.

6. Convertisseur à découpage selon l'une quelconque des revendications 1 à 4, comprenant en outre un moyen de mesure (21) du courant de sortie (is) du convertisseur, ce moyen de mesure délivrant un signal de sortie représentatif du courant de sortie du convertisseur à une première entrée d'un moyen de régulation (22) dont une deuxième entrée reçoit un signal de consigne, le moyen de régulation (22) délivrant un signal fourni à l'entrée d'un modulateur (23) dont une première sortie envoie un signal de commande (SQ1) au premier moyen formant interrupteur (Q1) et dont une deuxième sortie envoie un signal de commande (SQ2) au deuxième moyen formant interrupteur (Q2), le convertisseur étant configuré en source de courant.

7. Commande d'actuateur électromécanique comportant un convertisseur à découpage selon l'une quelconque des revendications 1 à 6.

8. Automate de régulation comportant un convertisseur à découpage selon l'une quelconque des revendications 1 à 6.

9. Equipement terrestre, naval ou aéronautique comportant un convertisseur à découpage selon l'une quelconque des revendications 1 à 6.

10. Turbomoteur comportant un convertisseur à découpage selon l'une quelconque des revendications 1 à 6.

11. Procédé de fonctionnement d'un convertisseur à découpage selon l'une quelconque des revendications 1 à 6, le convertisseur étant alimenté par une tension positive (Vp) et une tension négative (Vm) par rapport à la masse, le convertisseur délivrant un courant de sortie (is) dans une charge (Z) branchée entre la première borne de sortie (SP) et la deuxième borne de sortie (SM), cette dernière étant reliée directement ou à travers une résistance à la masse, **caractérisé en ce qu'**il comprend les étapes suivantes, pour un cycle de fonctionnement et pour faire passer un courant négatif dans la charge (Z) :
- une première étape au cours de laquelle le premier moyen formant interrupteur (Q1) est ouvert, la quatrième diode (D4) est passante, le deuxième moyen formant interrupteur (Q2) est fermé et les première (D1), deuxième (D2) et troisième (D3) diodes sont bloquées pendant une première partie de cycle, le convertisseur fonctionnant en mode continu ou en mode discontinu,
- une deuxième étape, succédant à la première étape, au cours de laquelle, les premier (Q1) et deuxième (Q2) moyens formant interrupteur sont ouverts, la deuxième diode (D2) est passante et les première (D1), troisième (D3) et quatrième (D4) diodes sont bloquées pendant une deuxième partie de cycle, cette deuxième partie de cycle n'achevant pas le cycle si le convertisseur fonctionne en mode discontinu et achevant le cycle si le convertisseur fonctionne en mode continu,
- une troisième étape, succédant à la deuxième étape si le convertisseur fonctionne en mode discontinu, au cours de laquelle les premier (Q1) et deuxième (Q2) moyens formant interrupteur sont ouverts et les première (D1), deuxième (D2), troisième (D3) et quatrième (D4) diodes sont bloquées pendant une troisième partie de cycle s'achevant à la fin du cycle.

12. Procédé de fonctionnement d'un convertisseur à découpage selon l'une quelconque des revendications 1 à 6, le convertisseur étant alimenté par une tension positive (Vp) et une tension négative (Vm) par rapport à la masse, la convertisseur délivrant un courant de sortie (is) dans une charge (Z) branchée entre la première borne de sortie (SP) et la deuxième borne de sortie (SM), **caractérisé en ce qu'**il comprend les étapes suivantes, pour un cycle de fonctionnement et pour faire passer un courant positif dans la charge (Z) :
- une première étape au cours de laquelle le premier moyen formant interrupteur (Q1) est fermé, la troisième diode (D3) est passante, le deuxième moyen formant interrupteur (Q2) est ouvert et les première (D1), deuxième (D2) et quatrième (D4) diodes sont bloquées pendant une première partie du cycle, le convertisseur fonctionnant en mode continu ou en mode discontinu,
- une deuxième étape, succédant à la première étape, au cours de laquelle la première diode (D1) est passante, les premier (Q1) et deuxième (Q2) moyens formant interrupteur sont ouverts et les deuxième (D2), troisième (D3) et quatrième (D4) diodes sont bloquées pendant une deuxième partie du cycle, cette deuxième partie de cycle n'achevant pas le cycle si le convertisseur fonctionne en mode discontinu et achevant le cycle si le convertisseur fonctionne en mode continu,
- une troisième étape, succédant à la deuxième étape si le convertisseur fonctionne en mode discontinu, au cours de laquelle les premier (Q1) et deuxième (Q2) moyens formant interrupteur sont ouverts, les premier (D1), deuxième (D2), troisième (D3) et quatrième (D4) diodes sont bloquées, pendant une troisième partie du cycle s'achevant à la fin du cycle.

13. Procédé de fonctionnement d'un convertisseur à découpage selon l'une quelconque des revendications 1 à 6, le convertisseur étant alimenté par une tension positive (Vp) et une tension négative (Vm) par rapport à la masse, la convertisseur délivrant un courant de sortie (is) dans une charge (Z) branchée entre la première borne de sortie (SP) et la deuxième borne de sortie (SM), **caractérisé en ce qu'**il comprend les étapes suivantes, pour un cycle de fonctionnement et pour faire passer un courant négatif dans la charge (Z), le convertisseur fonctionnant en mode continu :
- une première étape au cours de laquelle le premier moyen formant interrupteur (Q1) est fermé, la troisième diode (D3) est passante, le deuxième moyen formant interrupteur (Q2) est ouvert et les première (D1) et quatrième (D4) diodes sont bloquées pendant une première partie du cycle, la deuxième diode (D2) étant bloquée si la tension de sortie du convertisseur est, en valeur absolue, suffisamment faible,
- une deuxième étape, succédant à la première étape, au cours de laquelle la première diode (D1) est passante, les premier (Q1) et deuxième (Q2) moyens formant interrupteur sont ouverts et les deuxième (D2), troisième (D3) et quatrième (D4) diodes sont bloquées pendant une deuxième partie du cycle,
- une troisième étape, succédant à la deuxième étape, au cours de laquelle le deuxième moyen formant interrupteur (Q2) est fermé, la quatrième diode (D4) est passante, le premier moyen formant interrupteur (Q1) est ouvert et les première (D1), deuxième (D2) et troisième (D3) diodes sont bloquées, pendant une troisième partie du cycle,
- une quatrième étape, succédant à la troisième étape, au cours de laquelle la deuxième diode (D2) est passante, les premier (Q1) et deuxième (Q2) moyens formant interrupteur sont ouverts et la première (D1), troisième (D3) et quatrième (D4) diodes sont bloquées, pendant une quatrième partie du cycle s'achevant à la fin du cycle.

14. Procédé de fonctionnement d'un convertisseur à découpage selon l'une quelconque des revendications 1 à 6, le convertisseur étant alimenté par une tension positive (Vp) et une tension négative (Vm) par rapport à la masse, le convertisseur délivrant un courant de sortie (is) dans une charge (Z) branchée entre la première borne de sortie (SP) et la deuxième borne de sortie (SM), **caractérisé en ce qu'**il comprend les étapes suivantes, pour un cycle de fonctionnement et pour faire passer un courant positif dans la charge (Z), le convertisseur fonctionnant en mode continu :
- une première étape au cours de laquelle le premier moyen formant interrupteur (Q1) est fermé, la troisième diode (D3) est passante, le deuxième moyen formant interrupteur (Q2) est ouvert et les première (D1), deuxième (D2) et quatrième (D4) diodes sont bloquées pendant une première partie du cycle,
- une deuxième étape, succédant à la première étape, au cours de laquelle la première diode (D1) est passante, les premier (Q1) et deuxième (Q2) moyens formant interrupteur sont ouverts et les deuxième (D2), troisième (D3) et quatrième (D4) diodes sont bloquées pendant une deuxième partie du cycle,
- une troisième étape, succédant à la deuxième étape, au cours de laquelle le deuxième moyen formant interrupteur (Q2) est fermé, la quatrième diode (D4) est passante, le premier moyen formant interrupteur (Q1) est ouvert et les deuxième (D2) et troisième (D3) diodes sont bloquées, pendant une troisième partie du cycle, la première diode (D1) est bloquée si la tension de sortie est, en valeur absolue, suffisamment faible,
- une quatrième étape, succédant à la troisième étape, au cours de laquelle la deuxième diode (D2) est passante, les premier (Q1) et deuxième (Q2) moyens formant interrupteur sont ouverts et la première (D1), troisième (D3) et quatrième (D4) diodes sont bloquées, pendant une quatrième partie du cycle s'achevant à la fin du cycle.

## Claims

1. Chopping converter supplied by a positive voltage (Vp) and a negative voltage (Vm) with respect to earth, and delivering an output voltage between a first output terminal (SP) and a second output terminal (SM), the latter terminal being directly connected to earth or through a resistor, comprising three windings (Ls1, Ls2, Lp) wound around a magnetic core, a first (Ls1) and a second (Ls2) of said windings being mounted in series and wound in opposition, their shared ends, or firsts ends, being connected to earth, the second end of the first winding (Ls1) being connected to the positive voltage (Vp) through the intermediary of a first diode (D1) inversely mounted in relation to the positive voltage (Vp), the second end of the second winding (Ls2) being connected to the negative voltage (Vm) through the intermediary of a second diode (D2) inversely mounted in relation to the negative voltage (Vm), the third winding (Lp) having a first end connected to a mid point of a branch connecting the positive voltage (Vp) to the negative voltage (Vm), the part of branch connecting the mid point to the positive voltage (Vp) comprising, arranged in series, a first switch forming means (Q1) and a third diode (D3) directly mounted in relation to the positive voltage (Vp), and together forming a unidirectional switch with direct and inverse blocking capability, the part of the branch connecting the mid point to the negative voltage (Vm) comprising, arranged in series, a second switch forming means (Q2) and a fourth diode (D4) directly mounted in relation to the negative voltage (Vm), and together forming a unidirectional switch with direct and inverse blocking capability, the second end of the third winding (Lp) being connected to the first output terminal (SP), the third winding (Lp) having a number of turns greater than the number of turns of the first winding (Ls1) and greater than the number of turns of the second winding (Ls2).

2. Chopping converter according to claim 1, in which a smoothing capacitor (Cs) is connected between the first output terminal (SP) and earth.

3. Chopping converter according to one of claims 1 or 2, in which, in the branch connecting the positive voltage (Vp) to the negative voltage (Vm), said arrangement in series consists in arranging the first (Q1) and second (Q2) switch forming means on the side of the respective positive or negative voltages and arranging the diodes (D3, D4) on the side of the mid point.

4. Chopping converter according to any of claims 1 to 3, in which the first (Q1) and second (Q2) switch forming means are chosen among MOS transistors, bipolar transistors, IGBT transistors or any other switch having a bi-directional conduction capability and a direct blocking capability.

5. Chopping converter according to any of claims 1 to 4, further comprising a means (11) of measuring the output voltage of the converter, this measuring means delivering an output signal representative of the output voltage to a first input of a regulation means (12) in which a second input receives a set point signal, the regulation means (12) delivering a signal supplied to the input of a modulator (13) in which a first output sends a command signal (SQ1) to the first switch forming means (Q1) and in which a second output sends a command signal (SQ2) to the second switch forming means (Q2), the converter being thereby configured in voltage source.

6. Chopping converter according to any of claims 1 to 4, further comprising a means (21) of measuring the output current (is) of the converter, this measuring means delivering an output signal representative of the output current of the converter to a first input of a regulation means (22) in which a second input receives a set point signal, the regulation means (22) delivering a signal supplied to the input of a modulator (23) in which a first output sends a command signal (SQ1) to the first switch forming means (Q1) and in which a second output sends a command signal (SQ2) to the second switch forming means (Q2), the converter being configured in current source.

7. Electromagnetic actuator control comprising a chopping converter according to any of claims 1 to 6.

8. Regulating automaton comprising a chopping converter according to any of claims 1 to 6.

9. Terrestrial, naval or aeronautic equipment comprising a chopping converter according to any of claims 1 to 6.

10. Turbine engine comprising a chopping converter according to any of claims 1 to 6.

11. Method for operating a chopping converter according to any of claims 1 to 6, the converter being supplied by a positive voltage (Vp) and a negative voltage (Vm) with respect to earth, the converter delivering an output current (is) in a load (Z) connected between the first output terminal (SP) and the second output terminal (SM), said terminal being connected directly or through a resistor to earth, **characterised in that** it comprises the following steps, for an operating cycle and to pass a negative current in the load (Z):
- a first step during which a first switch forming means (Q1) are open, the fourth diode (D4) is conducting, the second switch forming means (Q2) are closed and the first (D1), second (D2) and third (D3) diodes are blocked during a first part of the cycle, the converter operating in continuous mode or in discontinuous mode,
- a second step, following the first step, during which, the first (Q1) and second (Q2) switch forming means are open, the second diode (D2) is conducting and the first (D1), third (D3) and fourth (D4) diodes are blocked during a second part of the cycle, this second part of the cycle not ending the cycle if the converter operates in discontinuous mode and ending the cycle if the converter operates in continuous mode,
- a third step, following the second step if the converter operates in discontinuous mode, during which the first (Q1) and second (Q2) switch forming means are open and the first (D1), second (D2), third (D3) and fourth (D4) diodes are blocked during a third part of the cycle ending at the end of the cycle.

12. Method for operating a chopping converter according to any of claims 1 to 6, the converter being supplied by a positive voltage (Vp) and a negative voltage (Vm) with respect to earth, the converter delivering an output current (is) in a load (Z) connected between the first output terminal (SP) and the second output terminal (SM), **characterised in that** it comprises the following steps, for an operating cycle and to pass a positive current in the load (Z):
- a first step during which a first switch forming means (Q1) are closed, the third diode (D3) is conducting, the second switch forming means (Q2) are open and the first (D1) second (D2) and fourth (D4) diodes are blocked during a first part of the cycle, the converter operating in continuous mode or in discontinuous mode,
- a second step, following the first step, during which the first diode (D1) is conducting, the first (Q1) and second (Q2) switch forming means are open and the second (D2), third (D3) and fourth (D4) diodes are blocked during a second part of the cycle, this second part of the cycle not ending the cycle if the converter operates in discontinuous mode and ending the cycle if the converter operates in continuous mode,
- a third step, following the second step if the converter operates in discontinuous mode, during which the first (Q1) and second (Q2) switch forming means are open, the first (D1), second (D2), third (D3) and fourth (D4) diodes are blocked, during a third part of the cycle ending at the end of the cycle.

13. Method for operating a chopping converter according to any of claims 1 to 6, the converter being supplied by a positive voltage (Vp) and a negative voltage (Vm) with respect to earth, the converter delivering an output current (is) in a load (Z) connected between the first output terminal (SP) and the second output terminal (SM), **characterised in that** it comprises the following steps, for an operating cycle and to pass a negative current in the load (Z), the converter operating in continuous mode:
- a first step during which a first switch forming means (Q1) are closed, the third diode (D3) is conducting, the second switch forming means (Q2) are open and the first (D1) and fourth (D4) diodes are blocked during a first part of the cycle, the second diode (D2) being blocked if the output voltage of the converter is, in absolute value, sufficiently low,
- a second step, following the first step, during which the first diode (D1) is conducting, the first (Q1) and second (Q2) switch forming means are open and the second (D2), third (D3) and fourth (D4) diodes are blocked during a second part of the cycle,
- a third step, following the second step, during which the second switch forming means (Q2) are closed, the fourth diode (D4) is conducting, a first switch forming means (Q1) are open and the first (D1), second (D2) and third (D3) diodes are blocked, during a third part of the cycle,
- a fourth step, following the third step, during which the second diode (D2) is conducting, the first (Q1) and second (Q2) switch forming means are open and the first (D1), third (D3) and fourth (D4) diodes are blocked, during a fourth part of the cycle ending at the end of the cycle.

14. Method for operating a chopping converter according to any of claims 1 to 6, the converter being supplied by a positive voltage (Vp) and a negative voltage (Vm) with respect to earth, the converter delivering an output current (is) in a load (Z) connected between the first output terminal (SP) and the second output terminal (SM), **characterised in that** it comprises the following steps, for an operating cycle and to pass a positive current in the load (Z), the converter operating in continuous mode:
- a first step during which a first switch forming means (Q1) are closed, the third diode (D3) is conducting, the second switch forming means (Q2) are open and the first (D1), second (D2) and fourth (D4) diodes are blocked during a first part of the cycle,
- a second step, following the first step, during which the first diode (D1) is conducting, the first (Q1) and second (Q2) switch forming means are open and the second (D2), third (D3) and fourth (D4) diodes are blocked during a second part of the cycle,
- a third step, following the second step, during which the second switch forming means (Q2) are closed, the fourth diode (D4) is conducting, a first switch forming means (Q1) are open and the second (D2) and third (D3) diodes are blocked, during a third part of the cycle, the first diode (D1) is blocked if the output voltage is, in absolute value, sufficiently low,
- a fourth step, following the third step, during which the second diode (D2) is conducting, the first (Q1) and second (Q2) switch forming means are open and the first (D1), third (D3) and fourth (D4) diodes are blocked, during a fourth part of the cycle ending at the end of the cycle.

## Patentansprüche

1. Schalt-Wandler, der mit einer positiven Spannung (Vp) und einer negativen Spannung (Vm), bezogen auf die Masse, versorgt wird, und der eine Ausgangsspannung Zwischen einem ersten Ausgangsanschluss (SP) und einem zweiten Ausgangsanschluss (SM) abgibt, wobei letzterer direkt oder über einen Widerstand mit der Masse verbunden ist, der drei Wicklungen (Ls1, Ls2, Lp) enthält, die um einen magnetischen Kern gewickelt sind, wobei eine erste (Ls1) und eine zweite (Ls2) dieser Wicklungen in Reihe angeordnet und in entgegen gesetzten Richtungen gewickelt sind, wobei ihre gemeinsamen Enden oder ersten Enden mit der Masse verbunden sind, wobei das zweite Ende der ersten Wicklung (Ls1) mit der positiven Spannung (Vp) über eine erste Diode (D1) verbunden ist, die bezogen auf die positive Spannung (Vp) entgegen gesetzt gerichtet angebracht ist, wobei das zweite Ende der zweiten Wicklung (Ls2) mit der negativen Spannung (Vm) über eine zweite Diode (D2) verbunden ist, die bezogen auf die negative Spannung (Vm) entgegen gesetzt gerichtet angebracht ist, wobei die dritte Wicklung (Lp) ein erstes Ende aufweist, das mit einer Mittelstelle eines Zweigs verbunden ist, der die positive Spannung (Vp) mit der negativen Spannung (Vm) verbindet, wobei der Zweigabschnitt, der die Mittelstelle mit der positiven Spannung (Vp) verbindet, in Reihe angeordnet ein erstes Umschalter-bildendes Mittel (Q1) und eine bezogen auf die positive Spannung (Vp) in Mitrichtung angebrachte dritte Diode (D3) enthält und insgesamt einen Einwegschalter mit Sperrmöglichkeit in beiden Richtungen bildet, wobei der Zweigabschnitt, der die Mittelstelle mit der negativen Spannung (Vm) verbindet, in Reihe angeordnet ein zweites Umschalter-bildendes Mittel (Q2) und eine bezogen auf die negative Spannung (Vm) in Mitrichtung angebrachte vierte Diode (D4) enthält und insgesamt einen Einwegschalter mit Sperrmöglichkeit in beiden Richtungen bildet, wobei das zweite Ende der dritten Wicklung (Lp) mit dem ersten Ausgangsanschluss (SP) verbunden ist, wobei die dritte Wicklung (Lp) eine Anzahl von Windungen aufweist, die größer als die Anzahl der Windungen der ersten Wicklung (Ls1) und größer als die Anzahl der Windungen der zweiten Wicklung (Ls2) ist.

2. Schalt-Wandler nach Anspruch 1, bei dem ein Glättungs-Kondensator (Cs) zwischen den ersten Ausgangsanschluss (SP) und die Masse geschaltet ist.

3. Schalt-Wandler nach Anspruch 1 oder 2, bei dem in dem Zweig, der die positive Spannung (Vp) mit der negativen Spannung (Vm) verbindet, die genannte Reihenanordnung darin besteht, die ersten und zweiten Umschalter-bildenden Mittel (Q1, Q2) auf der Seite der positiven bzw. negativen Spannung anzuordnen und die Dioden (D3, D4) auf der Seite der Mittelstelle.

4. Schalt-Wandler nach einem der Ansprüche 1 bis 3, bei dem die ersten und zweiten Umschalter-bildenden Mittel (Q1, Q2) unter den MOS-Transistoren, den bipolaren Transistoren, den IGBT-Transistoren oder beliebigen anderen Schaltern mit bidirektionaler Leitfähigkeit und direkter Sperrfähigkeit gewählt sind.

5. Schalt-Wandler nach einem der Ansprüche 1 bis 4, der ferner ein Messmittel (11) zum Messen der Ausgangsspannung des Wandlers aufweist, wobei dieses Messmittel ein Ausgangssignal, das die Ausgangsspannung ausdrückt, an einen ersten Eingang eines Regelmittels (12) abgibt, dessen zweiter Eingang ein Referenzsignal empfängt, wobei das Regelmittel (12) ein Signal abgibt, das dem Eingang eines Modulators (13) zugeführt wird, dessen erster Ausgang ein Steuersignal (SQ1) an das erste Umschalter-bildende Mittel (Q1) sendet, und dessen zweiter Ausgang ein Steuersignal (SQ2) an das zweite Umschalter-bildende Mittel (Q2) sendet, wobei der Wandler **dadurch** als Spannungsquelle konfiguriert ist.

6. Schalt-Wandler nach einem der Ansprüche 1 bis 4, der ferner ein Messmittel (21) zum Messen des Ausgangsstroms (is) des Wandlers aufweist, wobei dieses Messmittel ein Ausgangssignal, das den Ausgangsstrom des Wandlers ausdrückt, an einen ersten Eingang eines Regelmittels (22) abgibt, dessen zweiter Eingang ein Referenzsignal empfängt, wobei das Regelmittel (22) ein Signal abgibt, das dem Eingang eines Modulators (23) zugeführt wird, dessen erster Ausgang ein Steuersignal (SQ1) an das erste Umschalter-bildende Mittel (Q1) sendet, und dessen zweiter Ausgang ein Steuersignal (SQ2) an das zweite Umschalter-bildende Mittel (Q2) sendet, wobei der Wandler **dadurch** als Stromquelle konfiguriert ist.

7. Elektromechanische Steller-Steuerung, die einen Schalt-Wandler nach einem der Ansprüche 1 bis 6 enthält.

8. Regelautomat, der einen Schalt-Wandler nach einem der Ansprüche 1 bis 6 enthält.

9. Vorrichtung zu Lande, zu Wasser oder in der Luft, die einen Schalt-Wandler nach einem der Ansprüche 1 bis 6 enthält.

10. Turbomotor, der einen Schalt-Wandler nach einem der Ansprüche 1 bis 6 enthält.

11. Arbeitsverfahren eines Schalt-Wandlers nach einem der Ansprüche 1 bis 6, wobei der Wandler mit einer positiven Spannung (Vp) und einer negativen Spannung (Vm), bezogen auf die Masse, versorgt wird, wobei der Wandler einen Ausgangsstrom (is) in eine Ladung (Z) abgibt, die zwischen dem ersten Ausgangsanschluss (SP) und dem zweiten Ausgangsanschluss (SM) geschaltet ist, wobei letzterer direkt oder über einen Widerstand mit der Masse verbunden ist,
**dadurch gekennzeichnet,**
**dass** es für einen Arbeitszyklus und um einen Negativstrom in die Ladung (Z) zu schicken, die folgenden Schritte umfasst:
- einen ersten Schritt, bei dem das erste Umschalter-bildende Mittel (Q1) geöffnet ist, die vierte Diode (D4) leitend ist, das zweite Umschalter-bildende Mittel (Q2) geschlossen ist und die erste Diode (D1), die zweite Diode (D2) und die dritte Diode (D3) während eines ersten Zyklusteils gesperrt sind, wobei der Wandler im kontinuierlichen Modus oder im diskontinuierlichen Modus arbeitet,
- einen zweiten Schritt, der auf den ersten Schritt folgt, und bei dem das erste und das zweite Umschalter-bildende Mittel (Q1, Q2) geöffnet sind, die zweite Diode (D2) leitend ist und die erste Diode (D1), die dritte Diode (D3) und die vierte Diode (D4) während eines zweiten Zyklusteils gesperrt sind, wobei dieser zweite Zyklusteil den Zyklus nicht beendet, wenn der Wandler im diskontinuierlichen Modus arbeitet, und den Zyklus beendet, wenn der Wandler im kontinuierlichen Modus arbeitet,
- einen dritten Schritt, der auf den zweiten Schritt folgt, wenn der Wandler im diskontinuierlichen Modus arbeitet, und bei dem das erste und das zweite Umschalter-bildende Mittel (Q1, Q2) geöffnet sind und die erste Diode (D1), die zweite Diode (D2), die dritte Diode (D3) und die vierte Diode (D4) während eines dritten Zyklusteils gesperrt sind, der mit dem Zyklusende endet.

12. Arbeitsverfahren eines Schalt-Wandlers nach einem der Ansprüche 1 bis 6, wobei der Wandler mit einer positiven Spannung (Vp) und einer negativen Spannung (Vm), bezogen auf die Masse, versorgt wird, wobei der Wandler einen Ausgangsstrom (is) in eine Ladung (Z) abgibt, die zwischen dem ersten Ausgangsanschluss (SP) und dem zweiten Ausgangsanschluss (SM) geschaltet ist,
**dadurch gekennzeichnet,**
**dass** es für einen Arbeitszyklus und um einen Positivstrom in die Ladung (Z) zu schicken, die folgenden Schritte umfasst:
- einen ersten Schritt, bei dem das erste Umschalter-bildende Mittel (Q1) geschlossen ist, die dritte Diode (D3) leitend ist, das zweite Umschalter-bildende Mittel (Q2) geöffnet ist und die erste Diode (D1), die zweite Diode (D2) und die vierte Diode (D4) während eines ersten Zyklusteils gesperrt sind, wobei der Wandler im kontinuierlichen Modus oder im diskontinuierlichen Modus arbeitet,
- einen auf den ersten Schritt folgenden zweiten Schritt, bei dem die erste Diode (D1) leitend ist, das erste und das zweite Umschalter-bildende Mittel (Q1, Q2) geöffnet sind und die zweite Diode (D2), die dritte Diode (D3) und die vierte Diode (D4) während eines zweiten Zyklusteils gesperrt sind, wobei dieser zweite Zyklusteil den Zyklus nicht beendet, wenn der Wandler im diskontinuierlichen Modus arbeitet, und den Zyklus beendet, wenn der Wandler im kontinuierlichen Modus arbeitet,
- einen dritten Schritt, der auf den zweiten Schritt folgt, wenn der Wandler im diskontinuierlichen Modus arbeitet, und bei dem das erste und das zweite Umschalter-bildende Mittel (Q1, Q2) geöffnet sind und die erste Diode (D1), die zweite Diode (D2), die dritte Diode (D3) und die vierte Diode (D4) während eines dritten Zyklusteils gesperrt sind, der mit dem Zyklusende endet.

13. Arbeitsverfahren eines Schalt-Wandlers nach einem der Ansprüche 1 bis 6, wobei der Wandler mit einer positiven Spannung (Vp) und einer negativen Spannung (Vm), bezogen auf die Masse, versorgt wird, wobei der Wandler einen Ausgangsstrom (is) in eine Ladung (Z) abgibt, die zwischen dem ersten Ausgangsanschluss (SP) und dem zweiten Ausgangsanschluss (SM) geschaltet ist,
**dadurch gekennzeichnet,**
**dass** es für einen Arbeitszyklus und um einen Negativstrom in die Ladung (Z) zu schicken, wobei der Wandler im kontinuierlichen Modus arbeitet, die folgenden Schritte umfasst:
- einen ersten Schritt, bei dem das erste Umschalter-bildende Mittel (Q1) geschlossen ist, die dritte Diode (D3) leitend ist, das zweite Umschalter-bildende Mittel (Q2) geöffnet ist und die erste Diode (D1) und die vierte Diode (D4) während eines ersten Zyklusteils gesperrt sind, wobei die zweite Diode (D2) gesperrt ist, wenn die Ausgangsspannung des Wandlers, was den absoluten Wert betrifft, ausreichend gering ist,
- einen auf den ersten Schritt folgenden zweiten Schritt, bei dem die erste Diode (D1) leitend ist, das erste und das zweite Umschalter-bildende Mittel (Q1, Q2) geöffnet sind und die zweite Diode (D2), die dritte Diode (D3) und die vierte Diode (D4) während eines zweiten Zyklusteils gesperrt sind,
- einen auf den zweiten Schritt folgenden dritten Schritt, bei dem das zweite Umschalter-bildende Mittel (Q2) geschlossen ist, die vierte Diode (D4) leitend ist, das erste Umschalter-bildende Mittel (Q1) geöffnet ist und die erste Diode (D1), die zweite Diode (D2) und die dritte Diode (D3) während eines dritten Zyklusteils gesperrt sind,
- einen auf den dritten Schritt folgenden vierten Schritt, bei dem die zweite Diode (D2) leitend ist, das erste Umschalter-bildende Mittel (Q1) und das zweite Umschalter-bildende Mittel (Q2) geöffnet sind und die erste Diode (D1), die dritte Diode (D3) und die vierte Diode (D4) während eines vierten Zyklusteils, der mit dem Zyklusende endet, gesperrt sind.

14. Arbeitsverfahren eines Schalt-Wandlers nach einem der Ansprüche 1 bis 6, wobei der Wandler mit einer positiven Spannung (Vp) und einer negativen Spannung (Vm), bezogen auf die Masse, versorgt wird, wobei der Wandler einen Ausgangsstrom (is) in eine Ladung (Z) abgibt, die zwischen dem ersten Ausgangsanschluss (SP) und dem zweiten Ausgangsanschluss (SM) geschaltet ist,
**dadurch gekennzeichnet,**
**dass** es für einen Arbeitszyklus und um einen Positivstrom in die Ladung (Z) zu schicken, wobei der Wandler im kontinuierlichen Modus arbeitet, die folgenden Schritte umfasst:
- einen ersten Schritt, bei dem das erste Umschalter-bildende Mittel (Q1) geschlossen ist, die dritte Diode (D3) leitend ist, das zweite Umschalter-bildende Mittel (Q2) geöffnet ist und die erste Diode (D1), die zweite Diode (D2) und die vierte Diode (D4) während eines ersten Zyklusteils gesperrt sind,
- einen auf den ersten Schritt folgenden zweiten Schritt, bei dem die erste Diode (D1) leitend ist, das erste und das zweite Umschalter-bildende Mittel (Q1, Q2) geöffnet sind und die zweite Diode (D2), die dritte Diode (D3) und die vierte Diode (D4) während eines zweiten Zyklusteils gesperrt sind,
- einen auf den zweiten Schritt folgenden dritten Schritt, bei dem das zweite Umschalter-bildende Mittel (Q2) geschlossen ist, die vierte Diode (D4) leitend ist, das erste Umschalter-bildende Mittel (Q1) geöffnet ist und die zweite Diode (D2) und die dritte Diode (D3) während eines dritten Zyklusteils gesperrt sind, während die erste Diode (D1) gesperrt ist, wenn die Ausgangsspannung des Wandlers, was den absoluten Wert betrifft, ausreichend gering ist,
- einen auf den dritten Schritt folgenden vierten Schritt, bei dem die zweite Diode (D2) leitend ist, das erste Umschalter-bildende Mittel (Q1) und das zweite Umschalter-bildende Mittel (Q2) geöffnet sind und die erste Diode (D1), die dritte Diode (D3) und die vierte Diode (D4) während eines vierten Zyklusteils, der mit dem Zyklusende endet, gesperrt sind.
